**Europäisches Patentamt**

**European Patent Office**

**Office européen des brevets**

(11) Veröffentlichungsnummer: **0 324 125**
**A1**

(12) **EUROPÄISCHE PATENTANMELDUNG**

(21) Anmeldenummer: **88121029.8**

(22) Anmeldetag: **15.12.88**

(51) Int. Cl.⁴: **F16M 5/00**

(30) Priorität: **16.12.87 DE 3742698**

(43) Veröffentlichungstag der Anmeldung:
**19.07.89 Patentblatt 89/29**

(84) Benannte Vertragsstaaten:
**ES FR IT**

(71) Anmelder: **EMAG MASCHINENFABRIK GMBH**
**Austrasse 24**
**D-7335 Salach/Württemberg(DE)**

(72) Erfinder: **Steinbach, Heinz**
**Schlatweg 16**
**D-7900 Ulm(DE)**

(74) Vertreter: **Zmyj, Erwin, Dipl.-Ing.**
**Rosenheimer Strasse 52**
**D-8000 München 80(DE)**

(54) **Verfahren zur Herstellung eines Maschinenbettes und Vorrichtung zur Durchführung des Verfahrens.**

(57) Der Tragkörper (1) weist H-förmigen Querschnitt auf und trägt an seinen nach oben ragenden Schenkeln (2) Führungsleisten (4), die bei der Herstellung des Tragkörpers mit angeformt werden. Die nach unten gerichteten Schenkel dienen als Befestigungskörper (3), um den Tragkörper in das Basisteil (18) des Maschinenbettes einzugießen. Die Befestigungskörper (3) mit Ansätzen (6) für eine formschlüssige Verbindung mit dem Basisteil (18) versehen. Um ein Nachbearbeiten der Führungsleisten nach dem Eingießen zu vermeiden, kommt eine Gießform mit gebogenen Auflagekörpern für die fertig bearbeiteten Führungsbahnen des Tragkörpers zum Einsatz, wobei die Biegung der Auflagekörper (12) nach dem Festspannen des Tragkörpers auf diesen eine Vorspannung und eine entsprechende Biegung des Tragkörpers hervorrufen, die der aufgrund des zu erwartenden Schwundes des Reaktionsharzbetons resultierenden Biegespannung entgegengerichtet und proportional ist.

Fig.1

Fig.3

## Verfahren zur Herstellung eines Maschinenbettes und Vorrichtung zur Durchführung des Verfahrens

Die Erfindung bezieht sich auf ein Verfahren zur Herstellung eines Maschinenbettes bestehend aus einem Basisteil aus Reaktionsharzbeton und einem Führungsleisten aufweisenden Tragkörper. Die Erfindung bezieht sich auch auf eine Vorrichtung zur Durchführung des Verfahrens.

Eine besondere Schwierigkeit, die sich beim Eingießen von Metallteilen, insbesondere Führungsbahnen in Maschinenbetten aus Reaktionsharzbeton ergibt, besteht darin, daß das Grundmaterial, aus dem das Basisteil besteht, einem gewissen Schwund unterliegt, wodurch die Metallteile bzw. Tragkörper mit Führungsleisten bzw. Führungsbahnen nach dem Aushärten des Harzes gekrümmt sind. Deshalb war bisher immer eine Nachbearbeitung erforderlich.

Der Erfindung liegt daher die Aufgabe zugrunde, die aufgrund des Schwundes auftretenden Krümmung zu vermeiden und damit den Herstellungsvorgang zu vereinfachen.

Diese Aufgabe wird bei einem Verfahren der eingangsgemäßen Art erfindungsgemäß dadurch gelöst, daß der Tragkörper mit einer Vorspannung, die der aufgrund des zu erwartenden Schwundes des Reaktionsharzbetons resultierenden Biegespannung entgegengerichtet und proportional ist, beim Gießen des Basisteiles des Maschinenbettes eingegossen wird.

Durch diese Maßnahme ist es möglich den Tragköprer mit bereits fertig bearbeiteten Führungsleisten einzugießen, wodurch der Herstellungsvorgang des gesamten Maschinenbettes wesentlich vereinfacht wird.

Zur Durchführung des Verfahrens, bei dem der Tragkörper während der Herstellung des Maschinenbettes einer Vorspannung unterworfen wird, eignet sich in besonderem Maße eine Vorrichtung gemäß der Erfindung, die dadurch gekennzeichnet ist, daß in einer verwindungssteifen Gießform am Boden derselben Auflagekörper für die Auflage des Tragkörpers vorgesehen sind, der mit seinen Führungsleisten auf den Auflagekörpern auflegbar und festspannbar ist, daß die Auflagekörper entsprechend der gewünschten Vorspannung des Tragekörpers in Längsrichtung gebogen ausgeführt sind und daß in die Gießform Formwände einsetzbar sind, die an dem mit seinen Führungsleisten im wesentlichen nach unten in die Gießform eingelegten Tragkörper oberhalb der Führungsleisten abdichtend an den Tragkörper anlegbar sind.

Durch die gekrümmte Ausführung der Auflagekörper erhält der Tragkörper mit seinen Führungsbahnen bzw. Führungsleisten nach dem Aufspannen auf diese Auflagekörper eine gekrümmte Form, wobei die Krümmung gerade so groß ist, daß nach dem Schwund des Reaktionsharzbetons die Krümmung wieder aufgehoben ist, so daß nach der vollständigen Aushärtung ein Maschinenbett mit exakt ausgerichteten Führungsleisten entsteht wodurch ein Nachbearbeiten der Führungsleisten entfällt. Durch die einsetzbaren Formwände läßt sich in einfacher Weise der Bereich des Tragkörpers abgrenzen, der aus dem Reaktionsharzbeton herausragen soll.

Um eine seitliche Verkrümmung zu verhindern, kann ein seitlicher Anlagekörper für die seitliche Anlage des Tragkörpers an diesem vorgesehen sein.

Wenn in weiterer Ausgestaltung der Erfindung der Auflagekörper und der Anlagekörper als Prismen ausgeführt sind, so ist hierdurch eine äußerst genaue Positionierung des Tragkörpers in der Gießform möglich.

Um ein exaktes Abdichten zwischen dem Tragkörper und den einsetzbaren Formwänden zu erzielen, können die Formwände in vorteilhafter Weise an ihren mit dem Tragkörper in Berührung kommenden Kanten mit einer nachgiebigen Dichtung, beispielsweise aus Moosgummi, versehen sein.

Die Erfindung wird nachfolgend anhand von in der Zeichnung dargestellten Ausführungsbeispielen näher erläutert. In der Zeichnung zeigen:

Fig. 1 einen Querschnitt durch eine erste Ausführungsform eines Tragkörpers mit Führungsleisten;

Fig. 2 einen Querschnitt durch eine zweite Ausführungsform eines Tragkörpers mit Führungsleisten;

Fig. 3 einen Querschnitt durch eine Form zur Herstellung eines Maschinenbettes mit eingegossenem Tragkörper; und

Fig. 4 eine Ansicht in Richtung der Schnittlinie IV - IV in Figur 3 ohne eingelegten Tragkörper.

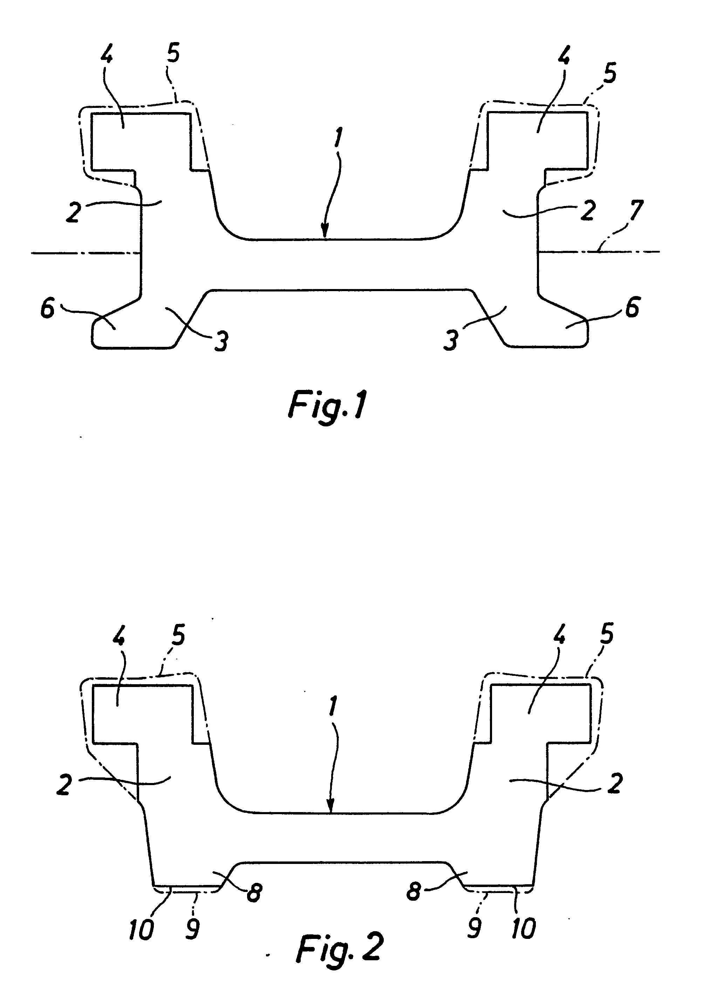

Wie aus Fig. 1 ersichtlich, weist ein Tragkörper 1 im wesentlichen H-förmigen Querschnitt auf, wobei die nach oben ragenden Schenkel 2 länger ausgeführt sind als die nach unten ragenden Schenkel 3. An den oberen Enden der Schenkel 2 sind Führungsleisten 4 angeformt, die bei der Herstellung des Tragkörpers beispielsweise durch Walzen, Pressen oder Ziehen mit einer Bearbeitungszugabe 5 hergestellt werden. Der Umriß dieser Bearbeitungszugabe ist mit strichpunktierten Linien angedeutet, während die fertig bearbeitete Führungsleiste 4 mit ausgezogenen Linien umgrenzt ist. Die nach unten ragenden Schenkel dienen als Befestigungskörper 3, die jeweils nach außen gerichtete Ansätze 6 zur formschlüssigen Verankerung in einem Basisteil eines Maschinenbettes aufweisen, dessen Oberkante mit einer strichpunktierten Linie 7 angedeutet ist.

Bei der Ausgestaltung nach Fig. 2 sind Teile, die denjenigen nach Fig. 1 entsprechen, mit den gleichen Bezugszeichen wie in Fig. 1 versehen. Der Tragkörper 1 nach Fig. 2 ist an seinem oberen Teil entsprechend der Ausführungsform nach Fig. 1 gestaltet, während die unteren Schenkel kürzer ausgeführt und mit dem Bezugszeichen 8 bezeichnet sind. Die kurzen Schenkel weisen an ihrem unteren Ende jeweils Bearbeitungszugaben 9 auf, die mit strichpunktierten Linien umgrenzt sind. Nach der Bearbeitung wird der Tragkörper 1 mit der durch eine ausgezogene Linie 10 begrenzten Fläche, die die Unterseite der Befestigungskörper 8 bildet, direkt im Basisteil des Maschinenbettes eingegossen.

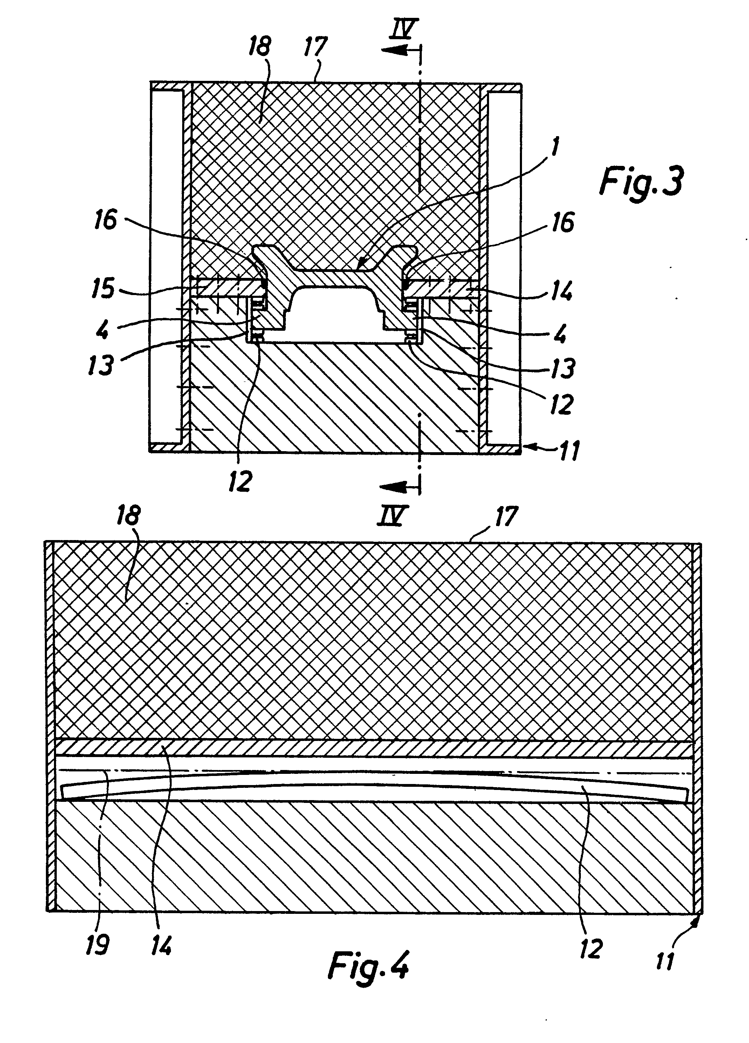

In Fig. 3 ist eine Form 11 dargestellt, die zur Herstellung eines Maschinenbettes aus Reaktionsharzbeton mit eingegossenem Tragkörper dient. Die Form 11 ist äußerst verwindungssteif ausgeführt und weist zwei Auflagekörper 12 und einen Anlagekörper 13 auf, wobei die Auflagekörper 12 einen in die Form eingelegten Tragkörper 1 an den Oberseiten der Führungsleisten 4 abstützen. Hierbei ist der Tragkörper mit den Führungsleisten nach unten in der Form angeordnet. Der Anlagekörper 13 stützt eine Führungsleiste 4 an ihrer Seite ab. Dieser Anlagekörper 13, der an jeder der beiden Seiten des Tragkörpers 1 vorgesehen sein kann und deshalb in der Zeichnung an beiden Seiten eingezeichnet ist, kann gegebenenfalls auch entfallen. Einsetzbare Formwände 14 und 15, die mit Gummidichtungen 16 an den zur Anlage am Tragkörper 1 bestimmten Kanten versehen sind, werden nach dem Positionieren des Tragkörpers 1 und nach dessen Festspannen auf den vorzugsweise als Prismenauflagen ausgebildeten Auflagekörpern, am Tragkörper mit den Gummidichtungen 16 dichtend angelegt. Hierauf wird der verbleibende Raum, in den der Tragkörper mit seinem unteren Ende hineingreift, mittels Reaktionsharzbeton ausgegossen. Die mit 17 bezeichnete Linie stellt im ausgegossenen Zustand die Unterseite des Basisteils 18 des Maschinenbettes dar. Bei einer schrägen Einbettung des Tragkörpers 1 ergibt sich eine Schrägbettanordnung. Da beim Positionieren des Tragkörpers in der Form dieser mit den fertig bearbeiteten gehärteten und geschliffenen Führungsleisten 4 an den Auflagekörpern 12 bzw. am Anlagekörper 13 anliegt, ist eine präzise Lage des Tragkörpers und insbesondere der Führungsleisten gewährleistet, wodurch ein späteres Nachbearbeiten der Führungsleisten nicht mehr nötig ist.

Aus Fig. 4 ist die Formgebung der Auflagekörper 12 ersichtlich. Diese sind in Längsrichtung gebogen ausgeführt, wobei zur besseren Kenntlichmachung der Biegung dieser Auflagekörper 12 eine horizontale Tangente in Form einer strichpunktierten Linie 19 eingezeichnet ist. Gegen diese als Prismenauflagen ausgebildeten Auflagekörper 12 wird der Tragkörper gespannt und dabei der gebogenen Form dieser Auflagekörper angepaßt. Er erhält somit eine Vorspannung durch den gebogenen Zustand, die nach dem Aushärten des Reaktionsharzbetons aufgrund des Schwundes desselben wieder ausgeglichen wird. Die Biegung der Auflagekörper 12 ist so gewählt, daß sie nach Beendigung des Aushärtevorganges, d. h. nach Eintritt des vollständigen Schwundes, der zu einer Biegung entgegengesetzt der durch die Auflagekörper 12 bedingten Biegung führt, einen vollständig ebenen und ausgerichteten Tragkörper mit entsprechend ausgerichteten Führungs leisten ergibt. Die Biegung der Auflagekörper 12 ist also proportional entgegengesetzt der durch den eintretenden Schwund zwangsweise erfolgenden Biegung des eingegossenen Tragkörpers mit seinen Führungsleisten.

## Ansprüche

1. Verfahren zur Herstellung eines Maschinenbettes bestehend aus einem Basisteil aus Reaktionsharzbeton und einem Führungsleisten aufweisenden Tragkörper, **dadurch gekennzeichnet,** daß der Tragkörper mit einer Vorspannung, die der aufgrund des zu erwartenden Schwundes des Reaktionsharzbetons resultierenden Biegespannung entgegengerichtet und proportional ist, beim Gießen des Basisteiles des Maschinenbettes eingegossen wird.

2. Vorrichtung zur Durchführung des Verfahrens nach Anspruch 1, **dadurch gekennzeichnet,** daß in einer verwindungssteifen Gießform (11) am Boden derselben Auflagekörper (12) für die Auflage des Tragkörpers (1) vorgesehen sind, der mit seinen Führungsleisten (4) auf den Auflagekörpern (12) auflegbar und festspannbar ist, daß die Auflagekörper entsprechend der gewünschten Vorspannung des Tragekörpers in Längsrichtung gebogen ausgeführt sind und daß in die Gießform (11) Formwände (14, 15) einsetzbar sind, die an dem mit seinen Führungsleisten (4) im wesentlichen nach unten in die Gießform (11) eingelegten Tragkörper (1) oberhalb der Führungsleisten (4) abdichtend an den Tragkörper (1) anlegbar sind.

3. Vorrichtung nach Anspruch 2, **dadurch gekennzeichnet,** daß ein seitlicher Anlagekörper (13) für die seitliche Anlage des Tragkörpers (1) an diesem vorgesehen ist.

4. Vorrichtung nach Anspruch 2 oder 3, **dadurch gekennzeichnet,** daß die Auflagekörper (12) und der Anlagekörper (13) als Prismen ausgeführt sind.

5. Vorrichtung nach einem der Ansprüche 2 bis 4, **dadurch gekennzeichnet,** daß die Formwände (14, 15) an ihren mit dem Tragkörper (1) in Berührung kommenden Kanten mit einer nachgiebigen Dichtung (16), beispielsweise aus Moosgummi, versehen sind.

*Fig.1*

*Fig. 2*

Fig.3

Fig.4

**Europäisches Patentamt**

# EUROPÄISCHER RECHERCHENBERICHT

Nummer der Anmeldung

EP 88 12 1029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | POLYMERE UND BETON, 4. INTERNATIONALER KONGRESS ICPIC'84, 19.-21. September 1984, Seiten 139-143, ITW, Darmstadt, DE; H. TANNER: "Anwendung von Polymerbeton im Maschinenbau" * Seiten 141-142, Punkt 3 * --- | 1 | F 16 M 5/00 |
| A | DE-A-2 521 036 (DECKEL) * Seite 7, Zeile 24 - Seite 8, Zeile 7; Figur 5 * --- | 1 | |
| A | RUSSIAN ENGINEERING JOURNAL, Band 46, Nr. 3, 1966, Seiten 41,42; M.M. BOL'SHAKOV et al.: "Reinforced-concrete beds for disc cutting-off machines" --- | 1 | |
| A | GB-A- 957 742 (ROBERTSON) * Insgesamt * --- | 1 | |
| A | PATENT ABSTRACTS OF JAPAN, Band 7, Nr. 203 (M-241)[1348], 8. September 1983; & JP-A-58 102 638 (OKUMA TEKKOSHO K.K.) 18-06-1983 --- | 1 | RECHERCHIERTE SACHGEBIETE (Int. Cl.4) |
| A | PATENT ABSTRACTS OF JAPAN, Band 7, Nr. 44 (M-195)[1189], 22. Februar 1983; & JP-A-57 194 845 (INOUE JAPAX KENKYUSHO K.K.) 30-11-1982 ----- | 1 | F 16 M B 23 Q B 28 B |

Der vorliegende Recherchenbericht wurde für alle Patentansprüche erstellt

| Recherchenort | Abschlußdatum der Recherche | Prüfer |
|---|---|---|
| DEN HAAG | 21-04-1989 | BARON C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)